# EUROPÄISCHE PATENTANMELDUNG

(11) **EP 1 103 729 A1**
(43) Veröffentlichungstag der Anmeldung: **30.05.2001**
(21) Anmeldenummer: 99123429.5
(22) Anmeldetag: 24.11.1999
(51) Int. Cl.: F16B 2/14

(54) **Vorrichtung zum Verbinden von länglichen Profilen**

(71) Anmelder: Preuss Messebaugesellschaft mbH, 25488 Holm (DE)
(72) Erfinder: Preuss, Peter, 25488 Holm (DE)
(74) Vertreter: Glawe, Delfs, Moll & Partner

(57) **Zusammenfassung**

Die Vorrichtung zum Verbinden von länglichen, mit Bohrungen versehenen Profilen weist eine innere Hülse (2) und eine äußere Hülse (3) mit kegelstumpfförmigen Oberflächenabschnitten auf, die gegeneinander gleiten können. Wird ein Keil (9) eingetrieben, so werden die Hülsen (2, 3) gegeneinander verschoben, wodurch sich die äußere Hülse (3), die aus einem oder mehreren Hohlzylindersegmenten besteht, auseinandergespreizt wird und dadurch in der Bohrung eines Profils verankert werden kann.

## Beschreibung

Die Erfindung betrifft eine Vorrichtung zum Verbinden von länglichen, mit Bohrungen versehenen Profilen, insbesondere für den Messe- und Ladenbau, mit zwei durch ein Gelenk verbundenen im wesentlichen zylindrischen Teilen, die durch mittels eingetriebenen Keilen erzeugten Kräften auseinanderspreizbar sind, mit je einer Zugstange, die über eine erstes Druckelement auf einer dem Gelenk benachbarten Seite des zylindrischen Teils eine Druckkraft, und einem zweiten Druckelement, das auf die andere Seite eine Druckkraft ausübt, wenn ein Keil eingetrieben ist, wobei jeder zylindrische Teil eine innere Hülse, die von einer Druckscheibe mit Kraft beaufschlagbar ist, und eine äußere Hülse aufweist.

Vorrichtungen dieser Art sind in großer Zahl für das Verbinden von Rohren und Hohlprofilen bekannt, wobei je ein zylindrischer Teil in ein Rohr oder Hohlprofil eingeführt und dann auseinandergespreizt wird (EP 0 501 148 A1, DE 37 37 171 C2, DE 38 27 142 C2). Es ist aber auch, was eine unübliche Verwendung solcher Vorrichtungen darstellt, bekannt, eine Vorrichtung der eingangs genannten Art zum Verbinden von Profilen zu verwenden, die mit Bohrungen versehen sind, die senkrecht zur Längserstreckung der Profile ausgerichtet sind (EP 0 870 879 A2).

Bei dieser vorbekannten Vorrichtung wird eine gummielastische innere Hülse zusammengedrückt und spreizt dadurch eine äußere Hülse auseinander, wodurch die Vorrichtung in den Profilen verankert wird und dieselben verbindet.

Das gummielastische Material kann mit der Zeit ermüden oder sich qualitätsmäßig verschlechtern. Außerdem erlaubt es wegen seiner Elastizität keine besonders stabile Verbindung der Profile.

Die Aufgabe der Erfindung besteht in der Schaffung einer Vorrichtung, die auf möglicherweise sich verschlechternde gummielastische Materialien verzichtet und eine sichere positive Verbindung zwischen den Profilen ermöglicht.

Die erfindungsgemäße Lösung besteht darin, daß die innere Hülse mehrere aneinander anschließende, kegelstumpfförmige Oberflächenabschnitte und die äußere Hülse ein oder mehrere Hohlzylindersegmente mit komplementären kegelstumpfförmigen Innenflächen aufweist und durch einen oder mehrere Ringe zusammengehalten ist, und beide Hülsen, wenn ein Keil eingetrieben ist, durch je ein Druckelement mit Druckkraft beaufschlagt werden.

Es wird also völlig auf gummielastische Elemente zum Auseinanderdrücken der äußeren Hülse verzichtet. Dies wird vielmehr dadurch erreicht, daß die kegelstumpfförmigen Oberflächenabschnitte aufeinander gleiten. Werden die Keile eingetrieben, so wird über die Zugstange, das erste Druckelement und das zweite Druckelement auf die innere Hülse und die äußere Hülse Kräfte in entgegengesetzter Richtung ausgeübt. Dadurch wird die aus mehreren Segmenten bestehende äußere Hülse auseinandergedrückt. Diese äußere Hülse besteht aus einem oder mehreren, insbesondere mindestens drei Hohlzylindersegmenten mit axialen Trennungslinien. Damit diese Segmente im unbenutzten Zustand nicht herausfallen, werden sie durch einen oder mehrere Ringe zusammengehalten, die allerdings für die Klemmwirkung, mit der die Profile verbunden werden, keine Funktion haben. Diese Klemmwirkung erfolgt vielmehr völlig ohne elastische Glieder und ist daher sehr fest und stabil.

Die kegelstumpfförmigen Oberflächenabschnitte der inneren Hülse können sich nach außen (in Richtung vom Gelenk weg) verjüngen oder erweitern. Im ersten Fall wird das erste Drukkelement auf die innere Hülse und das zweite Druckelement auf die äußere Hülse. Im anderen Fall ist es umgekehrt.

Zweckmäßigerweise sind die Ringe O-Ringe.

Damit die Vorrichtung leicht wieder gelöst werden kann, wenn die Profile voneinander getrennt werden sollen, ist zweckmäßigerweise vorgesehen, daß die Hülsen entgegen der Richtung, in der sie mit Kraft beaufschlagbar sind, durch Federkraft vorgespannt sind. Diese Federkraft ist unwirksam, wenn die Keile eingetrieben sind und die äußeren Hülsen nach außen gespreizt sind. Werden die Keile aber entfernt, so drücken die Federn die Hülsen in axiale Richtung in ihre Ruhestellung zurück, wodurch sich der Durchmesser der äußeren Hülse verringert, so daß die Richtung leicht aus den Bohrungen der Profile herausgenommen werden kann.

Zweckmäßigerweise sind die Hülsen aus faserverstärktem Kunststoff, wobei es sich als besonders zweckmäßig erwiesen hat, wenn nur die äußeren Hülsen aus faserverstärktem Kunststoff sind.

Der Öffnungswinkel der Kegelstümpfe wird je nach Material entsprechend der Grenze der Haftreibung bestimmt, damit die Vorrichtung auch wieder von den Profilen gelöst werden kann. Zweckmäßigerweise wählt man hier einen Öffnungswinkel der Kegelstümpfe, der ungefähr 4° bis 30° beträgt (d.h. einen Winkel von 2° bis 15° zwischen Zylinderachse und Kegelstumpfoberfläche). Als besonders zweckmäßig hat es sich aber erwiesen, daß die Öffnungswinkel der Kegelstümpfe ungefähr 8° bis 12° betragen.

Bei einer besonders vorteilhaften Ausführungsform ist vorgesehen, daß beide Zugstangen mit je einem Gelenkteil verbunden sind und das erste Druckelement eines zylindrischen Teils mit Spiel angeordnet ist und gegen den anderen Gelenkteil drückbar ist. Werden die Keile dann eingetrieben, so wird nicht nur die äußere Hülse gespreizt, um die Verankerung an den Profilen zu bewirken. Vielmehr werden auch die beiden Gelenkteile gegeneinander gedrückt und dadurch in der gegenwärtigen Winkelposition arretiert.

Die Erfindung wird im folgenden anhand von vorteilhaften Ausführungsformen unter Bezugnahme auf die beigefügten Zeichnungen beschrieben. Es zeigen:
- Fig. 1: eine erste Ausführungsform der Erfindung im Querschnitt;
- Fig. 2: einen Schnitt entlang der Linie II-II von Fig. 1;
- Fig. 3: eine zweite Ausführungsform der Erfindung im Querschnitt; und
- Fig. 4: einen Schnitt entlang der Linie IV-IV von Fig. 3.

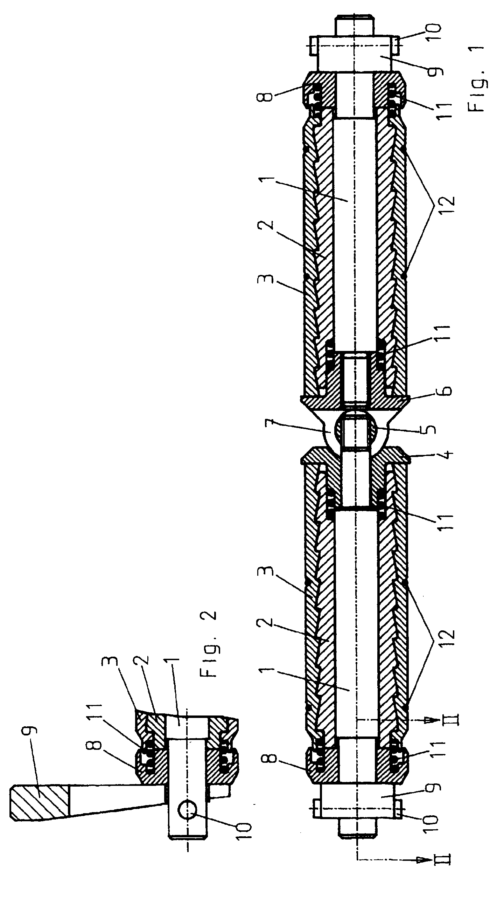

Die Ausführungsform der Fig. 1 besteht im wesentlichen aus zwei zylindrischen Teilen, die jeweils eine Zugstange 1, eine darauf gleitbar angeordnete innere Hülse 2 und eine äußere Hülse 3 aufweisen. Die äußere Hülse 3 besteht dabei aus einem oder mehreren, insbesondere drei oder mehr Hohlzylindersegmenten, so daß sie sich radial aufweiten kann. Die innere Hülse 2 ist mit kegelstumpfförmigen Oberflächenabschnitten, die direkt aneinander anschließen versehen. Entsprechende kegelstumpfförmige Abschnitte weist an ihrer inneren Oberfläche die äußere Hülse 3 auf. Auf der in der Fig. 1 linken Seite ist ein erstes scheibenförmiges Druckelement 4 mit axialem Spiel angebracht. Die Zugstange 1 ist am Zapfen 5 des Gelenks befestigt, mit dem die beiden Teile miteinander verbunden sind. Beim rechten Teil ist das erste Druckelement 6 fest an der Zugstange 1 angebracht. Die Zugstange 1 des rechten Teils und das erste Druckelement 6 dieses Teils sind starr mit dem Gelenkauge 7 des mittigen Gelenks verbunden. An den beiden Enden befinden sich zweite scheibenförmige Druckelemente 8, die auf der betreffenden Zugstange 1 gleiten können. Diese zweiten Druckelemente 8 können in Richtung zum Gelenk 5, 7 gedrückt werden, indem, wie dies in Fig. 2 gezeigt ist, an den Enden gabelförmige Keile 9 eingetrieben werden, die sich an einem Stift 10 abstützen. Dadurch wird eine Zugkraft auf die entsprechende Zugstange 1 ausgeübt und die ersten Druckelemente 4 bzw. 6 nach außen gezogen, während die zweiten Druckelemente 8 nach innen gedrückt werden. Die ersten Drukkelemente 4, 6 bewegen dabei die äußeren Hülsen 3 nach außen, während die zweiten Druckelemente 8 die inneren Hülsen 2 nach innen drücken, wobei die kegelstumpfförmigen Oberflächenabschnitte aufeinander gleiten, wodurch die äußeren Hülsen 3 expandiert werden. Dadurch können die Profile aneinander befestigt werden. Sollen die Profile wieder voneinander gelöst werden, werden die Keile 9 entfernt. Druckfedern 11 drücken dabei die inneren Hülsen 2 und die äußeren Hülsen 3 entgegen der Richtung, in der sie mit Kraft beaufschlagt waren, wieder zurück, so daß sich der Durchmesser der äußeren Hülsen 3 verringert, so daß die Vorrichtung aus den Bohrungen der Profile wieder herausgezogen werden kann. Durch 0-Ringe 12 wird schließlich noch sichergestellt, daß die Hohlzylindersegmente der Hülse 3 sich nicht von der Vorrichtung lösen können.

Wie erwähnt sitzt das erste Druckelement (4) des linken Teils axial beweglich auf der Zugstange 1. Wird der Keil 9 auf der linken Seite eingetrieben, so wird durch den Zug der Zugstange 1 das Druckelement 4 gegen den Gelenkteil 7 gedrückt und arretiert daher das Gelenk in dieser Stellung. Wie aus der Fig. ersichtlich ist, ist mit dieser Ausführungsform ein Winkel von 0° bis 45° zwischen den beiden Vorrichtungsteilen möglich.

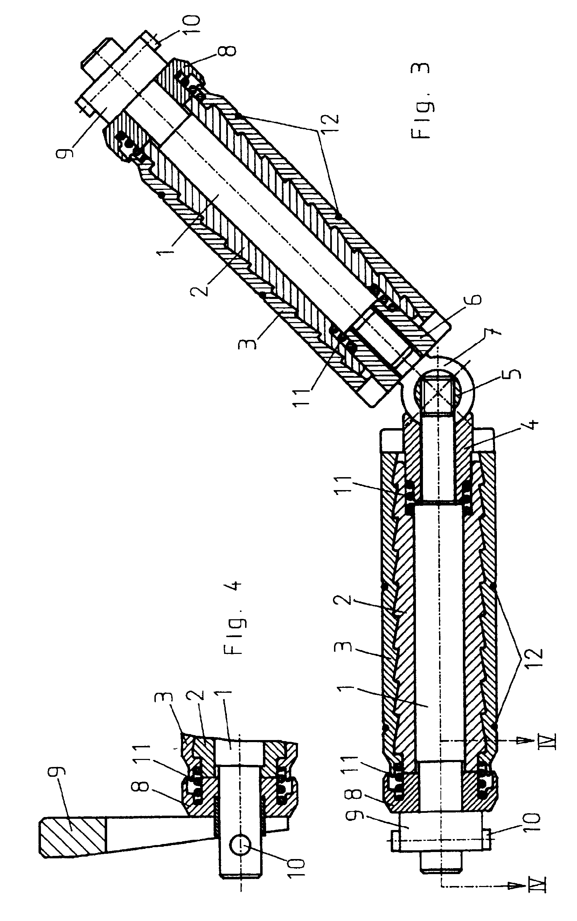

Die Ausführungsform der Fig. 3 und 4 entspricht im wesentlichen der Ausführungsform der Fig. 1 und 2 mit dem Unterschied, daß die ersten Druckelemente 4, 6 etwas anders ausgebildet sind, so daß Schwenkwinkel von 30° bis 90° zwischen den beiden Profilteilen möglich sind.

## Patentansprüche

1. Vorrichtung zum Verbinden von länglichen, mit Bohrungen versehenen Profilen, insbesondere für den Messe- und Ladenbau, mit zwei durch ein Gelenk (5, 7) verbundenen im wesentlichen zylindrischen Teilen, die durch mittels eingetriebenen Keilen (9) erzeugten Kräften auseinanderspreizbar sind, mit je einer Zugstange (1), die über ein erstes Druckelement (4) auf einer dem Gelenk (5, 7) benachbarten Seite des zylindrischen Teils eine Druckkraft, und einem zweiten Druckelement (8), das auf die andere Seite eine Druckkraft ausübt, wenn ein Keil (9) eingetrieben ist, wobei jeder zylindrische Teil eine innere Hülse (2) und eine äußere Hülse (3) aufweist, dadurch gekennzeichnet, daß die innere Hülse (2) mehrere aneinander anschließende kegelstumpfförmige Oberflächenabschnitte aufweist und die äußere Hülse (3) ein oder mehrere Hohlzylindersegmente mit komplementären kegelstumpfförmigen Innenflächen aufweist und durch einen oder mehrere Ringe (12) zusammengehalten ist und beide Hülsen (2, 3), wenn ein Keil (9) eingetrieben ist, durch je ein Druckelement (4, 6, 8) mit Druckkraft beaufschlagt werden.

2. Vorrichtung nach Anspruch 1, dadurch gekennzeichnet, daß die kegelstumpfförmigen Oberflächenabschnitte der inneren Hülse (2) sich nach der vom Gelenk (5, 7) entfernten Seite im Durchmesser verringern und die innere Hülse (2) vom ersten Druckelement (4, 6) und die äußere Hülse (3) vom zweiten Druckelement (8) mit Druckkraft beaufschlagbar ist.

3. Vorrichtung nach Anspruch 1, dadurch gekennzeichnet, daß die kegelstumpfförmigen Oberflächenabschnitte der inneren Hülse (2) sich nach der vom Gelenk (5, 7) entfernten Seite im Durchmesser vergrößern und die äußere Hülse (3) vom ersten Druckelement (4, 6) und die innere Hülse (2) vom zweiten Druckelement (8) mit Druckkraft beaufschlagbar ist.

4. Vorrichtung nach einem der Ansprüche 1-3, dadurch gekennzeichnet, daß die Ringe (12) O-Ringe sind.

5. Vorrichtung nach einem der Ansprüche 1-4, dadurch gekennzeichnet, daß die Hülsen (2, 3) entgegen der Richtung in der sie mit Kraft beaufschlagbar sind, durch Federkraft (11) vorgespannt sind.

6. Vorrichtung nach einem der Ansprüche 1 bis 5, dadurch gekennzeichnet, daß die Hülsen (2, 3) aus faserverstärktem Kunststoff sind.

7. Vorrichtung nach einem der Ansprüche 1 bis 5, dadurch gekennzeichnet, daß die äußeren Hülsen (3) aus faserverstärktem Kunststoff sind.

8. Vorrichtung nach einem der Ansprüche 1 bis 7, dadurch gekennzeichnet, daß der Öffnungswinkel der Kegelstümpfe ungefähr 4° bis 30° beträgt.

9. Vorrichtung nach einem der Ansprüche 1 bis 8, dadurch gekennzeichnet, daß der Öffnungswinkel der Kegelstümpfe ungefähr 8° bis 12° beträgt.

10. Vorrichtung nach einem der Ansprüche 1 bis 8, dadurch gekennzeichnet, daß beide Zugstangen (1) mit je einem Gelenkteil (5, 7) verbunden sind und die erste Druckelement (4) eines zylindrischen Teils mit Spiel angeordnet ist und gegen den anderen Gelenkteil (7) drückbar ist.
